Europäisches Patentamt

European Patent Office

Office européen des brevets

(11) Veröffentlichungsnummer: **0 245 525**
**A1**

(12) # EUROPÄISCHE PATENTANMELDUNG

(21) Anmeldenummer: **86105217.3**

(51) Int. Cl.⁴: **B65G 51/03**

(22) Anmeldetag: **17.04.86**

(43) Veröffentlichungstag der Anmeldung:
**19.11.87 Patentblatt 87/47**

(84) Benannte Vertragsstaaten:
**AT BE CH DE FR GB IT LI LU NL SE**

(71) Anmelder: **SIMONAZZI A. & L. S.p.A.**
**Via la Spezia 241/A**
**I-43016 Parma(IT)**

(72) Erfinder: **Limoni, Alfredo**
**Via Martiri della Libertà N. 111**
**I-43016 Parma(IT)**

(74) Vertreter: **Beszédes, Stephan G. Dr.**
**Münchener Strasse 80a Postfach 1168**
**D-8060 Dachau(DE)**

(54) **Pneumatische Fördereinrichtung für leere Behälter.**

(57) Die Erfindung betrifft eine pneumatische Fördereinrichtung für leere Behälter (7) mit einem unter Druck stehenden Kanal (3), welcher mit Blasöffnungen (4) versehen ist, sowie einer vom Kanal (3) unabhängigen verstellbaren Aufhängungsschiene (1) und einem Paar von seitlichen Führungen (2), bei welcher die seitlichen Führungen (2) in der Weise sowohl höhenverstellbar als auch breitenverstellbar sind, daß sie zum Anpassen der Fördereinrichtung an die verschiedenen Abmessungen der durchlaufenden Behälter (7) eingerichtet ist.

Die von gerichteten Öffnungen eines Kanales (3), welcher den Durchgang der Aufhängungsschiene (1) der Behälter (7) folgt, austretende Blasluft trifft auf den Körper der Behälter (7) und ein Paar seitliche Führungen (2) hält sie in senkrechter Stellung.

EP 0 245 525 A1

## Pneumatische Fördereinrichtung für leere Behälter

Die Erfindung betrifft eine neue pneumatische Fördereinrichtung für leere Behälter der Art, bei welcher diese längs Luftbahnen ohne Transportbänder bewegt werden.

In den herkömmlichen Fördereinrichtungen mit pneumatischer Bewegung werden die leeren Behälter, insbesondere Kunststofflaschen, von einem Luftstrahl, welcher auf den Hals der Flaschen auftrifft, bewegt. In diesen bekannten Systemen ist das obere Ende der Flaschen an einem Kanal von Blasluft, welche durch Auftreffen auf den Hals der Flaschen deren Bewegung hervorruft, aufgehängt. Diese bekannten Systeme, welche die Luft in die Nähe der Mündung der Flaschen blasen, haben jedoch den Nachteil, daß sie Außenluft in das Innere der Flaschen einführen und so durch Verunreinigung eine Einbuße an Sterilität innerhalb des leeren Behälters, welcher von der Waschanlage herkommt und zur Füllanlage geleitet wird, hervorrufen.

Aus dem deutschen Gebrauchsmuster 85 11 882 ist bereits auch eine Vorrichtung zum Transportieren von Flaschen, insbesondere Kunststofflaschen, mit einem im Mündungsbereich angeordneten Unterstützungskragen, bestehend aus einer Führungsbahn und einem mit dieser in Wirkungsverbindung stehenden Druckluftdüsenkanal, bei welcher die Führungsbahn oberhalb und auf Abstand zu je einem auf beiden Seiten des Förderweges der Flaschen befindlichen Druckluftdüsenkanal angeordnet ist und diese Düsenkanäle einen Abstand zueinander aufweisen, der deutlich größer als der Durchmesser der zu transportierenden Flaschen ist, wobei unterhalb dieser Düsenkanäle die seitliche Bewegungsbahn der Flaschen begrenzende Führungsleisten angeordnet sind, bekannt. Diese Vorrichtung hat jedoch den Nachteil, daß die Führungsleisten nicht verschiedenen Flaschenabmessungen angepaßt werden können und so die Vorrichtung nur für Flaschen mit nur ein und denselben Abmessungen brauchbar ist.

Der Erfindung liegt die Aufgabe zugrunde, unter Behebung der Nachteile des Standes der Technik eine pneumatische Fördereinrichtung für leere Behälter, bei welcher außer des Ausschließens der Verunreinigung durch die Einführung von verunreinigter Luft in das Innere der Flaschen auch die Gewährleistung der Führung von Flaschen mit verschiedenen Abmessungen und so die Anpaßbarkeit der Einrichtung an verschiedene Flaschenabmessungen, sowohl was die Flaschenhöhe als auch was die Flaschenweite betrifft, verwirklicht ist, zu schaffen.

Das Obige wurde überraschenderweise durch die Erfindung erreicht.

Gegenstand der Erfindung ist eine pneumatische Fördereinrichtung für leere Behälter mit einem unter Druck stehenden Kanal, welcher mit Blasöffnungen versehen ist, sowie einer vom Kanal unabhängigen verstellbaren Aufhängungsschiene und einem Paar von seitlichen Führungen, welche dadurch gekennzeichnet ist, daß die seitlichen Führungen in der Weise sowohl höhenverstellbar als auch breitenverstellbar sind, daß sie zum Anpassen der Fördereinrichtung an die verschiedenen Abmessungen der durchlaufenden Behälter eingerichtet ist.

Nach einer zweckmäßigen Ausführungsform der erfindungsgemäßen Fördereinrichtung ist das Paar von seitlichen Führungen von der Stellung der Aufhängeschiene und der Stellung des unter Druck stehenden Kanales unabhängig. Dadurch wird eine unabhängige Betätigung des Paares von seitlichen Führungen gewährleistet.

Außer der Unabhängigkeit der verstellbaren Aufhängungsschiene vom Kanal und der dadurch sich ergebenden Vermeidung der Verunreinigung des Inneren der Flaschen durch die Blasluft und der Veränderbarkeit der Stellung und der Abmessungen der Aufhängungsschiene und damit der Verwendbarkeit für Flaschenhälse mit verschiedenen Abmessungen ist erfindungswesentlich das Paar der seitlichen Führungen ebenfalls verstellbar, und zwar sowohl höhenverstellbar als auch breitenverstellbar, so daß dadurch die Anwendbarkeit der erfindungsgemäßen Fördereinrichtung auch für Flaschen mit verschiedenen Abmessungen des Flaschenkörpers ermöglicht ist. Diese Höhen- und Breitenverstellbarkeit der Stellung der seitlichen Führungen erleichtert außerordentlich die pneumatische Förderung von Flaschen mit verschiedenen Abmessungen. Dies verleiht eine große Anpaßbarkeit der erfindungsgemäßen pneumatischen Fördervorrichtung an die verschiedenen Ansprüche des Benutzers. Besonders vorteilhaft ist die Ausführungsform der erfindungsgemäßen pneumatischen Fördereinrichtigung, bei welcher sowohl die Aufhängungsschiene als auch das Paar von seitlichen Führungen verstellt werden können, ohne auf den Kanal einwirken zu müssen.

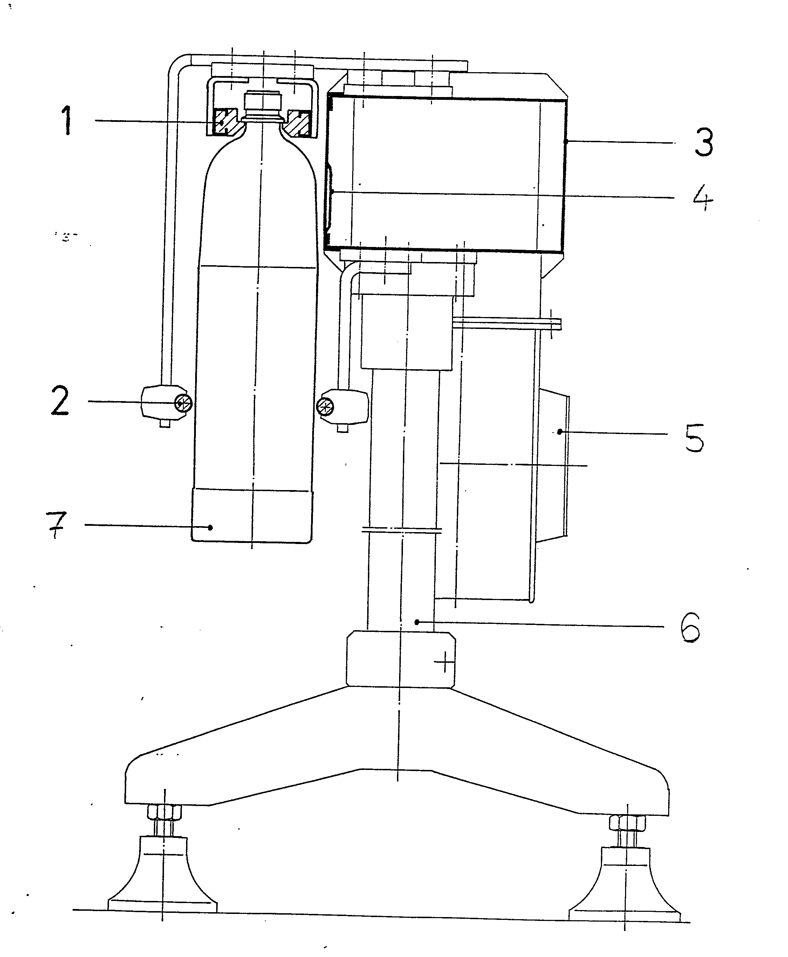

Die Erfindung wird an Hand der folgenden beispielhaften Darlegungen in Verbindung mit der Figur näher erläutert. Die Figur stellt einen Längsschnitt durch eine Ausführungsform der erfindungsgemäßen pneumatischen Fördereinrichtung dar.

Auf eine Aufhängungsschiene 1 ist eine Flasche 7 aufgehängt und diese folgt ersichtlich einer gemischtlinigen Bahn gemäß dem vom Benutzer der Anlage gewünschten Durchlauf. Diese Aufhängungsschiene 1 ist verstellbar an einen unter Druck stehenden Kanal 3, welcher mit gerichteten Blasöffnungen 4 versehen ist, befestigt.

Längs des Bewegungsdurchganges ist die Flasche 7, welche auf die Aufhängungsschiene 1 aufgehängt ist, an den Seiten auch von seitlichen Führungen 2 geführt, welche die vertikale Ausrichtung der Flasche während des Förderns gewährleisten. Ein Ventilator 5 liefert zum Kanal 3 Blasluft. Die Blasluft tritt aus den Blasöffnungen 4 aus und trifft auf die Flaschen 7 auf, wodurch sie an der Seite, jedoch in ausreichendem Abstand von ihrer Mündung und dadurch unter Vermeidung einer Verunreinigung stößt. Träger 6 gestatten das Einstellen des Kanales 3 in der vom Benutzer der Fördereinrichtung gewünschten Höhe.

Die höhen-und breitenverstellbaren seitlichen Führungen 2 gestatten die Förderung von Behältern mit verschiedenen Abmessungen. Die Aufhängungsschiene 1, welche breitenverstellbar ist, gestattet das Fördern von Flaschen mit Hälsen mit verschiedenen Abmessungen.

## Ansprüche

1.) Pneumatische Fördereinrichtung für leere Behälter (7) mit einem unter Druck stehenden Kanal (3), welcher mit Blasöffnungen (4) versehen ist, sowie einer vom Kanal (3) unabhängigen verstellbaren Aufhängungsschiene (1) und einem Paar von seitlichen Führungen (2), dadurch gekennzeichnet, daß die seitlichen Führungen (2) in der Weise sowohl höhenverstellbar als auch breitenverstellbar sind, daß sie zum Anpassen der Fördereinrichtung an die verschiedenen Abmessungen der durchlaufenden Behälter (7) eingerichtet ist.

2.) Fördereinrichtung nach Anspruch 1, dadurch gekennzeichnet, daß das Paar von seitlichen Führungen (2) von der Stellung der Aufhängeschiene (1) und der Stellung des unter Druck stehenden Kanales (3) unabhängig ist.

0 245 525

P 2 858 EL
SIMONAZZI A. & L. S.p.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | MATERIALS HANDLING NEWS, Nr. 340, April 1986, 4-seitiges, nicht seitennumeriertes, eingeheftetes Inserat "News from LING SYSTEMS LTD."; "issue" Nr. 3 <br> * Abschnitt "Carters packaging opts for jetstream PET bottle conveyor", insbesondere die Abbildung auf der oberen Seitenhälfte" * | 1,2 | B 65 G 51/03 |
| | --- | | |
| Y | EP-A-0 070 931 (THE MOTCH & MERRYWEATHER) <br> * Insgesamt * | 1,2 | |
| | --- | | |
| Y | US-A-3 647 266 (HURD et al.) <br> * Figuren 1,3, insbesondere Position 28; Zusammenfassung * | 1,2 | RECHERCHIERTE SACHGEBIETE (Int. Cl.4) |
| | ----- | | B 65 G |

Der vorliegende Recherchenbericht wurde für alle Patentansprüche erstellt.

| Recherchenort | Abschlußdatum der Recherche | Prüfer |
|---|---|---|
| DEN HAAG | 26-11-1986 | WERNER D.M. |